# EUROPEAN PATENT APPLICATION

(11) **EP 4 542 474 A1**
(43) Date of publication of application: **23.04.2025**
(21) Application number: 23204994.0
(22) Date of filing: 20.10.2023
(51) Int. Cl.: G06Q 20/06, G06Q 20/20, G06Q 20/36, G06Q 20/38, H04L 9/00

(54) **SYSTEM AND METHOD FOR OFFLINE SIGNING OF TRANSACTIONS**

(71) Applicant: UhuPay GmbH, 65760 Eschborn (DE)
(72) Inventor: Offer, Luca Felix, 64521 Groß-Gerau (DE); Eckart, Fabian, 64521 Groß-Gerau (DE)
(74) Representative: Dr. Langfinger & Partner

(57) **Abstract**

The present invention relates to a system for processing the signing of a blockchain transaction, the system comprising:
a) a digital storage medium configured to store a portion of an access-key for signing blockchain transactions; and
b) a signature terminal comprising an input means configured to receive an input representative for the remaining not-stored part of the access-key to complete the signature, wherein
a transaction to be signed on a blockchain is signed by a signing module based on a combination of the stored part of the access key on the digital storage medium and the input by the input means of the signature terminal.

## Description

The present invention relates to a method for digital offline signing of transaction.

Blockchain technology stands as a pivotal innovation in the digital landscape, introducing a paradigm shift in how data is securely and transparently processed. It serves as the backbone for a multitude of cryptocurrencies and has found applications across various domains, including finance, healthcare, and supply chain, to name a few.

A Blockchain is a decentralized and distributed ledger that records transactions across multiple computers in a network to ensure the data's security, transparency, and immutability. Each block in the blockchain contains a list of transactions, and each transaction is recorded only after being validated by network participants, known as nodes. Blocks are interlinked using cryptographic hashes, creating a chain of blocks-hence the term "Blockchain."

To execute a transaction on a blockchain, a user needs to create a transaction and sign it digitally. A transaction typically includes the sender's address, the recipient's address, the amount to be transferred, a transaction fee, and a nonce-a unique number to avoid double-spending and replay attacks.

Digital signing is a crucial aspect of blockchain transactions. Users hold a pair of cryptographic keys: a public key, which is shared openly, and a private key, kept secret. The user signs the transaction with their private key, creating a digital signature. This signature serves as a cryptographic proof that the transaction was created by the owner of the address and has not been altered.

When the transaction is broadcasted to the network, nodes within the blockchain network validate it. The nodes use the sender's public key to verify the digital signature, ensuring that it corresponds to the signed transaction and has been generated by the private key corresponding to the sender's address. This process ensures the integrity and authenticity of the transaction.

Once validated, the transaction is added to a block. The block undergoes a consensus process, such as Proof of Work or Proof of Stake, depending on the blockchain protocol, and is eventually added to the blockchain, finalizing the transaction.

Coming back to digital signing, wallets are essential tools that enable users to manage their digital assets securely. Two primary types of wallets are hot wallets and cold wallets, and they play a crucial role in signing transactions and managing private keys.

Hot wallets are cryptocurrency wallets that are connected to the internet, making them susceptible to online attacks. They are generally easier to set up and access and are suitable for the everyday management of cryptocurrencies. People commonly use hot wallets to store smaller amounts of cryptocurrencies for daily transactions and trading.

In hot wallets, the process of signing transactions is typically straightforward. Users initiate a transaction through the wallet interface, inputting the necessary transaction details like the recipient's address and the amount to be sent. The wallet software then uses the stored private key to digitally sign the transaction. Once signed, the transaction is broadcasted to the network for confirmation.

Contrastingly, cold wallets are cryptocurrency wallets that operate offline, disconnected from the internet, thereby providing enhanced security. They are ideal for the long-term storage of significant amounts of cryptocurrencies, shielding them from online vulnerabilities such as hacking and phishing attacks.

Signing transactions with cold wallets involves a more elaborate process. The transaction is usually created on an online device and then transferred to the cold wallet on an offline device for signing. The signed transaction is subsequently transferred back to an online device to be broadcasted to the network. This ensures that the private key never leaves the secure, offline environment of the cold wallet.

According to the state of the art, transactions in blockchains are processed online, which means besides the actual possible offline-signing of the transaction itself, the transaction is sent to the blockchain directly after signing for further processing. Online processing of transactions, while convenient and widely used, does pose several challenges, particularly regarding connectivity, speed, and security, which are outlined below.

Online processing of transactions is inherently dependent on having a stable and reliable internet connection. In areas with poor or no connectivity, performing online signing becomes challenging, potentially limiting access and usage.

Online environments are susceptible to a range of cyber threats, including phishing, malware, and man-in-the-middle attacks, potentially compromising sensitive information such as private keys. The constant connectivity required for online signing exposes users to potential vulnerabilities and exploits, necessitating robust security measures and constant vigilance.

One example is that a user wants to pay for a dinner at a restaurant. The user orders food and decides to pay using his cryptocurrency wallet, which requires online signing for transactions. The user opens his wallet app and inputs the necessary details to initiate the transaction. Due to the poor connectivity, the app struggles to load and intermittently loses connection to the network. After several attempts, the user manages to initiate the transaction. However, the poor connection results in slow propagation of the transaction to the network, causing substantial delays.

The unreliable internet connectivity impacts the speed at which the payment confirmation is received. The user and the waiter are left waiting, unsure if the payment has been successful and may go for another payment method.

While blockchain technology becomes more and more popular, the given example and many other user cases need a secure and fast method of offline transactions. The objective-technical problems with offline transactions are to achieve a synchronization between offline transactions and the continually evolving state of the blockchain.

For a transaction to be considered valid and finalized, it must be included in a block and added to the blockchain. This process requires interaction with the online network of nodes. The network nodes must reach consensus to validate and confirm the transaction, which requires online interaction.

Furthermore, blockchains maintain a synchronized global state that is updated with every confirmed transaction. An entirely offline transaction cannot update the global state of the online blockchain. The synchronized global state is crucial to prevent double-spending. Without synchronizing a transaction to the global ledger, there's no way to ensure that the same assets are not spent twice.

And third, for the recipients and other network participants to see and verify the transaction, it must be propagated across the network.

Offline transaction would need therefore to add the transaction to a block at a later point of time to have it processed properly, security measures are needed to avoid double spend and the transaction visibility for validation have to be ensured.

These technical problems are addressed by the present invention, wherein the solution is provided by a system for processing the signing of a blockchain transaction, the system comprising:
a) a digital storage medium configured to store a portion of an access-key for signing blockchain transactions; and
b) a signature terminal comprising an input means configured to receive an input representative for the remaining not-stored part of the access-key to complete the signature, wherein
   a transaction to be signed on a blockchain is signed by a signing module based on a combination of the stored part of the access key on the digital storage medium and the input by the input means of the signature terminal.

Thereby it may be of advantage that the digital storage medium is provided in form of or in combination with a RFID-Tag, NFC-Tag or UHF-Tag, each tag capable of storing a portion of said access key and transmitting said portion to an tag-reader, wherein said tags include passive, semi-passive, and semi-active tags.

Furthermore, it may be preferred that said input means selected from the group consisting of:
A physical keypad, a virtual keyboard displayed on a touchscreen interface, a voice recognition module, a biometric scanner; an RFID or NFC reader, a smart card reader, a secure point-to-point connection module, a rotary dial, or a light pen.

The present invention refers to a system for enabling offline transactions on a blockchain to solve the problems outlined above.

The system may comprise storage mediums and input means and signing modules. The surprising finding of the present invention is that an access-key may be separated into two portions, wherein in case not even the issuer of the system knows the complete access-key.

The first part of the access-key is stored on a digital storage medium. Each of the state types of storage mediums have specific advantages. RFID tags, especially passive ones, do not require a power source, allowing for long-term, maintenance-free use. They can securely store and transmit the key portion when queried by an appropriate RFID reader, even through physical barriers like walls or containers, providing a contactless retrieval of information.

NFC tags offer secure data transmission due to the short-range communication, typically requiring proximity within centimeters. This minimizes the risk of unauthorized interception, making it a suitable choice for situations where security is a priority.

UHF tags can operate over longer distances compared to NFC, allowing for more flexible and varied deployment scenarios. They can store and transmit the key portion effectively, even in cluttered or industrially dense environments.

Given this preferred storage means, the first part of the access-key is safely stored. But with this tag alone, no transaction can be signed. For signing the transaction, the second part of the access key has to be added on a signing module.

The storage means can as well be integrated into an accessory like a chain, a ring, or the like.

A signing module according to the present invention can be embedded in various forms, such as within a card reader or a payment terminal or in a device looking like and function like a card reader or a payment terminal. These are interactive devices designed to process payment transactions, typically using debit or credit cards, and they are crucial components in point-of-sale systems and the user is familiar with the same.

It there may be of advantage to either integrate the signing module into such a device to provide a seamless solution or to offer a similar device. The signing modules may work as describe below:

As well, a signing module can be a smartphone or a smart watch.

When a RFID, NFC or UHF tag comprising the first part of the access key e.g. on card or other device is swiped, inserted, or tapped on the terminal, the signing module reads the tag's information, securely transmitting it to the signing processor. The signing module within the terminal plays a pivotal role in this process, ensuring the integrity and authenticity of the transaction by signing it digitally.

### HIER KONNTE DANN EIN ABSATZ ZU DER DATENAUSWERTUNG GESCHRIEBEN WERDEN.

According to the state of the art and referring to a conventional payment terminals when credit or debit card information is transmitted, subsequent to the card reading process, users are usually required to enter a Personal Identification Number (PIN) for an additional layer of security. The PIN is a secret numeric code, known only to the cardholder, and serves to verify the user's identity.

According to the present invention, instead of using a PIN, the second part of the access-key is entered by the user. The entering of the second part of the access key is made with the help of a signature terminal comprising an input means configured to receive an input representative for the remaining not-stored part of the access-key to complete the signature.

The input means itself may be a physical keypad, a virtual keyboard displayed on a touchscreen interface, a voice recognition module, a biometric scanner; a RFID or NFC reader, a smart card reader, a secure point-to-point connection module, a rotary dial, or a light pen.

Therefore, the user has plenty of options to safely store the second part of the access key. The simples option is to keep the second part in mind and enter it via a keypad or touchpad. Other options are second RFID, NFC or UHF tags on smart cards or biometrical or other technical solutions.

For example, it could be possible that the information representative for the second part of the access-key is secured by a the biometric scanner that is selected from the group consisting of: a fingerprint scanner, an iris scanner, a facial recognition scanner, wherein the non-stored part of the access key is calculated based on this information by the signature terminal.

According to the invention, it may as well be possible that the system presents an enhanced methodology for the pseudonymization of access keys like seed phrases or private keys, enriching the security landscape and user interaction. The pseudonymization is effectuated through the creation of user-defined aliases or mappings which replace the standard corpus of words traditionally employed in the generation of seed phrases. This feature imbues a personalized and obfuscated layer to the access key, rendering it robust against unauthorized access.

In a typical embodiment, a standard seed phrase such as "apple banana cherry date elderberry fig grape" may be pseudonymized by the user to a user-defined alias like "aardvark bear cat dog elephant fox goose". Each word in the user-defined alias corresponds to a word in the standard seed phrase. This pseudonymized version could be remembered or stored by the user, while the system retains the mechanism to map it back to the original seed phrase when required.

The system could implement a mapping mechanism allowing for the translation of user-defined aliases back to the original seed phrases. An interactive interface may be provided for users to create, manage, and view their mappings. These mappings are securely stored within the system or on a secure external device, encrypted to ensure only authorized access.

Another embodiment according to the present invention may be to map the access-key or part of the accesss-key to a number like a Pin-code. This mapping could result in an access-key like "1234" instead of the words of e.g. a seed phrase. Of course, the logic could be a decimal system, a hex system, or other numerical systems.

In another embodiment, the second part of the access key is linked to the user's biometric data. During an access attempt, a biometric scanner captures the user's biometric data, which the system processes to calculate and retrieve the second part of the access key dynamically.

The linkage between the second part of the access key and the user's biometric data is stored securely and encrypted. Biometric scanners employed are accurate and reliable, ensuring a seamless user experience while maintaining a high level of security. The algorithm developed for the dynamic calculation of the access key based on captured biometric data is robust, ensuring a secure yet user-friendly access protocol.

The pseudonymization and the associated user-defined aliases or mappings augment the security framework by introducing a level of obfuscation, making unauthorized access exceedingly challenging. Additionally, the personalized interaction facilitated by pseudonymization enhances user engagement and adherence to security protocols, thereby fostering a more robust and user-centric security ecosystem.

The secure point-to-point connection module may be configured to receive PIN codes via a connection selected from the group consisting of Bluetooth or infrared.

In all cases, based on the input of two parts of a access key a transaction may be signed by the signing module.

By the help of a system according to the present invention it is possible to ensure the safety of signing of transactions as the access-key is only at one place for a very short time frame when needed for signing a transaction. Of course it is possible and preferred that both parts of the access-key are safely stored in a hardware encrypted secured element in the signing module and deleted directly after the signing is completed.

To further increase the safety of the system, each tag used within the system shall further be capable of receiving and executing kill codes, wherein the kill codes are in particular executed after a number of X attemps to derive the stored part of the access key in a given time frame, wherein X is preferably more than 10 attempts every 60 seconds.

"Kill codes" in the context of NFC or RFID tags refer to a specialized command or set of instructions that, when received by the tag, will render it permanently inoperable. This feature is designed primarily for privacy and security reasons, allowing for the deactivation of the tag to prevent any subsequent interaction or data retrieval. Kill codes are usually a string of characters or a password that is designed to irreversibly disable the tag's functionality. When the tag receives the kill command along with the correct kill code, its internal circuitry is altered, and it will no longer respond to any reader, effectively becoming inert.

The kill code according to the present invention may either be sent by the signing module or the signature terminal. It may as well be possible that the storage device itself has a protection circuit or software solution implemented that recognized attacks for unallowed access to the stored access-keys.

The sending of a kill code shall prevent the stored part of the access key can be retrieved by different attacks like brutforce or other attacks. It may of course be preferred that the access-key is in a hardware encrypted part of the storage medium and is in the alternative or additionally software encrypted.

To further explain the concept of kill code, there may be a scenario where the system discerns a pattern of repeated unauthorized attempts to derive the stored part of the access key, dispatching a kill code becomes imperative. For instance, if the system records more than X attempts within a 60-second timeframe, where X is preferably more than 10 attempts, a kill code should be dispatched to the concerned tag to preclude further unauthorized access attempts.

Another scenario may be that the system may be fortified with behavior analysis algorithms capable of detecting anomalous access patterns or unusual activities, indicative of a potential security breach. Upon detection of such anomalous behavior, the system, either the signing module or the signature terminal, is triggered to dispatch a kill code to the pertinent tag, rendering it inert and thereby thwarting any potential data compromise.

Furthermore, there may be situations where a security breach is confirmed through external monitoring systems or through manual verification. In such cases, a command to dispatch a kill code can be initiated externally by the system according to the invention. Upon receiving this command, the system expeditiously dispatches a kill code to the implicated tag, disabling it and preventing any subsequent unauthorized interactions or data retrieval.

It may further be preferred according to one embodiment of the present invention that the access key is stored by a user partly with the help of input means on the storage device or a new access key is generated by the system and partly displayed to the user and partly stored on the storage device, wherein in particular the access key is converted into figures according to the decimal system.

It may as well be preferred that the access key is a seed phrase or master seed phrase, which is in particular encrypted via SHA-256 or another cryptographic algorithm.

According to the present invention, it may be of advantage that the the access-key is generated by the system and directly party stored on the storage device and the second part only displayed to the user or stored on another separate storage device. This goes along with many advantages.

Since neither the user nor the system has the complete access-key, the risk of unauthorized access due to exposure of the key is minimized. It is much harder for attackers to brute-force a partial key than a complete one. Even if a malicious actor gains access to one part of the key, they cannot use it without the other part. If users make a mistake or are negligent with their part of the key, the consequences are less severe because the key is incomplete. It's harder for phishing attacks to succeed because malicious actors cannot get the complete key from the user.

Besides this security advantages for the safety of the user, it is crucial that also malicious attempts of the user itself are prevented.

In alignment with the present invention, providing the user with a "blank" card for initialization purposes presents a step towards ensuring both security and ease of setup. The card, once in the user's possession, becomes a canvas ready for either the transfer of existing partial private keys or the generation of new private keys. This flexibility caters to the varying preferences and technical proficiencies of the user base, making the system appealing to a broad spectrum of users.

The user interaction with the system is designed to be intuitive and less daunting compared to traditional methods. The conventional requirement of typing individual characters or words from a Seed-Phrase-Corpus is replaced by a more straightforward process. A standard protocol is established, facilitating a transformation into the decimal number system, which not only simplifies the input process but also opens the avenue for the creation of personalized PINs. This innovative approach enhances user experience while not compromising on the security.

The actual setup can be conducted via two primary channels - through dedicated terminals using RFID contact or through NFC-enabled smartphones. Both channels are engineered to provide a seamless setup experience. The RFID terminal method involves the user "inserting" the card into the terminal, initiating the setup process. On the other hand, utilizing NFC-enabled smartphones extends the convenience of setup to a device most users are familiar with, thereby reducing the setup learning curve significantly.

In cases where smartphones are employed for setup, a universal interface is leveraged, ensuring the sanctity of data during the transfer or generation of private keys. This approach exploits the inherent security features and functionalities of modern smartphones, aligning with the objective of ensuring robust security during the setup phase.

This methodology, according to the present invention, amalgamates robust security with user-centric design. The bifurcated storage of the access-key, coupled with a simplified and flexible setup process, forms a robust barrier against unauthorized access, be it from external malicious actors or from the user end. The journey from receiving a blank card to having a secure, personalized access key is designed to be intuitive, secure, and user-friendly, embodying the essence of a modern, sophisticated security system.

As outlined in the beginning, it would be a great advantage if it would be possible to allow blockchain transaction without the need to directly introduce the transaction for verification into the blockchain network. One of the problems is that if an transaction if executed "offline" within system like a system according to the present invention, double-spending and replay attacks have to be avoided. Replay attacks can be avoided by the later described network solution of signing terminals according the inventive system and double-spending is avoided while neither the user nor anyone else has the complete access-key.

Of course, this solution has some disadvantages regarding the recovery once the storage medium is damaged or lost or the user can't remember his second part of the access-key. While the user is responsible and has to take care of his part, the technical solutions of the storage medium have to be good enough to prevent technical failures or appropriate back-up strategies have to be implemented.

To avoid replay attacks and to ensure the overall safety of the system, it is preferred according to one embodiment of the present invention that a multiple a signing modules in connection with one or more signature terminals each forming a network, wherein within the network the status of each module and terminal, in particular hardware and/or software, is synchronized with the further modules and terminals.

Thereby, it may be of advantage that within the network, a consensus algorithm, preferably a Byzantine-Fault-Tolerance-Algorithm, is established to decide if a devices is working correct, improbably or malicious. The use of the Byzantine-Fault-Tolerance-Algorithm is just an example, simpler or more complex algorithms are comprised by the invention as well and known by those skilled in the art. In particular, blockchains or sub-nets of blockchains may be used within the network according to the invention.

In addressing a secure and robust technological framework, an inventive embodiment has been conceptualized, focusing meticulously on mitigating vulnerabilities such as replay attacks and ensuring the overall integrity and safety of the system. This embodiment proposes the incorporation of multiple signing modules interconnected with one or more signature terminals, collaboratively forming a cohesive network. The presence of multiple signature modules promotes redundancy and reliability, ensuring seamless functionality and resilience against potential system failures or malicious activities.

The essence of this architecture lies in the constant synchronization of each module and terminal within the network. Both hardware and software statuses of each component are perpetually synced with other modules and terminals. This synchronization plays a pivotal role in maintaining uniformity and coherence within the system, averting discrepancies and ensuring that every node in the network operates with the most updated and accurate information, subsequently contributing to the robustness and reliability of the system.

To ensure optimal functionality and security within the network, a consensus algorithm may be judiciously implemented as one preferred option.

A Byzantine Fault Tolerance (BFT) algorithm is preferred in this instance, esteemed for its proficiency in addressing and resolving the complexities and challenges associated with consensus in a network, especially when some components may be functioning erroneously or maliciously. The BFT algorithm excels in identifying discrepancies and potential failures, making it a potent tool in deciding whether a device is operating correctly, improbably, or with a malicious intent.

It is obvious that the BFT algorithm is an example of an implementation and the invention is not limited to this type of consensus algorithm as outlined above.

By integrating a Byzantine-Fault-Tolerance-Algorithm, the system gains the capability to endure and thwart Byzantine failures, maintaining system integrity even when some components of the network act in a haphazard or malicious manner. The algorithm plays an instrumental role in ensuring that all the honest nodes in the network can reach consensus, despite the presence of malicious nodes, making the system highly resilient to a broad spectrum of cyber threats.

Additionally, within the scope of the present invention, it may be advantageous to elucidate the operational dynamics of the terminals within the emerging networks, irrespective of their specific structural configurations. A salient aspect of this framework is the absence of a centralized "Main-Host" amongst these devices. Instead, each terminal acts as a "Host," or a Node, performing dual roles - functioning as a normal participant while possessing the capability to act as a host. This unique arrangement facilitates a decentralized operational ethos, where each terminal can autonomously interact with, and even disengage other terminals from the system as warranted by the network protocols or security guidelines

This decentralized paradigm, wherein every terminal embodies a node within the network, enhances the system's resilience against potential threats, and fortifies its operational integrity. Each node or terminal, while hosting certain functionalities, remains a part of the whole, contributing to the overall security and efficiency of the system. Moreover, this decentralized structure isn't mandated but is presented as an optional architectural layout, adding a layer of versatility to the solution. The architecture can be tailored to align with the specific needs or security requisites of the user base or the operational domain it is being deployed in.

The inherent flexibility of roles amongst the terminals in this optional decentralized architecture ensures that the system can adapt to varying levels of security requirements.

The advantage of having a network where each module and terminal is in sync is evident. The shared status within the network, complemented by the vigilant scrutiny of a Byzantine Fault Tolerance algorithm, allows the realization of a highly secure and reliable system, where the components are continually verified for integrity and authenticity. This approach not only prevents replay attacks by ensuring that each transaction is unique and legitimate but also guarantees the overall safety of the system by closely monitoring and validating the operational status of each module and terminal.

The combination of a blockchain combined with a network of signing modules as an intermediate "interface" for users to allow safe offline transaction that are forwarded and process in the blockchain at a later point of time solves the problem the user, the signing module or the signature terminals have to be online all the time but must be only from time to time only. Another aspect is that the network of signature terminals and signing modules may a separated network than the internet, which means that it is possible that there is a secure separated network of terminals and modules that have their own consensus algorithm ongoing while being safe from outside attacks.

Therefore, according to one embodiment of the present invention, for processing a transaction, the signing module is connected to the internet or in active connection with a computer network running a blockchain while the user may be offline.

As well, to may be preferred the signing module is offline and only connects to the internet or to an computer network running a blockchain at a later point in time or from time to time.

In this regard it may of course be preferred to work with blockchains that have consensus algorithms itself that are in particular of advantage for the given system. It may therefore be preferred that the blockchain, whose transaction is to be signed, allow vertical or horizontal scaling as well as temporal delegations, in particular utilizing proof-of-work algorithm that also uses zk-proofs, a proof-of-work algorithm with a delegated-proof-of-stake algorithm, and/or a combination of Plasma algorithms, proof-of-history algorithm, and proof-of-replication/delegated-proof-of-replication algorithms.

Opting for blockchains that facilitate both vertical and horizontal scaling aligns with the capability of temporal delegations within such blockchains and adds an extra layer of flexibility, allowing transactions to be executed in a manner that is not strictly bound by time constraints. This is in particular of advantage if transactions shall be added on a later point of time than the actual signing into the blockchain.

The integration of zk-proofs within proof-of-work algorithms exemplifies advancements in maintaining transaction privacy and security. By leveraging zero-knowledge proofs, transaction details can be verified without revealing the actual information, thus providing an extra layer of confidentiality and security. This feature becomes essential in an environment where privacy and data protection are of utmost importance.

Marrying proof-of-work algorithms with delegated-proof-of-stake algorithms brings forth a hybrid approach that combines the security and robustness of PoW with the efficiency and scalability of DPoS. This amalgamation ensures that the network remains secure from malicious activities while maintaining optimal operational functionality, allowing for a more democratic and equitable transaction validation process.

According to one embodiment it may be preferred that the transactions processed are payment transactions.

As well, the inventions comprises a method for processing a transaction, in particular a payment, wherein the user is connecting the digital storage medium to a signature terminal, the part of the access key stored on the storage medium is transferred for signing, and in the next step the user completes the access key with the help of the input means and confirms the transaction on the blockchain.

The method according to the invention may further have the option that not only actual payment transactions are managed, but also internal transactions and systems can be orchestrated through this platform. This encompasses a range of operational facets within an organization including Enterprise Resource Planning (ERP) systems, internal accounting systems, internal card systems, and bonus cards, thereby promoting a more integrated approach towards managing various internal processes.

Moreover, the method according to the invention could be extended to cater to the transfer of data concerning passes, other identification documents, or access codes. This suggests a broadening of the system's utility beyond merely financial transactions, indicating its potential in overseeing different types of data transfers. This functionality could be particularly beneficial in scenarios requiring identity verification or access control, showcasing the system's versatility.

Additionally, the system according to the invention may accommodate individual identifiers or classifications for transactions that are not paymentspecific. For example, it could be configured such that a particular pass may trigger an alarm, or certain types of cards or individual cards (based on a numerical assignment) may have restricted access post 17:00 hours. This aspect of the invention hints at a level of customizability and control, enabling tailored solutions for a variety of use cases.To sum up, the ability to sign transactions offline and submit them to the blockchain later is a groundbreaking feature of the present invention. It permits users to initiate transactions without the immediate need for internet connectivity, making the blockchain more accessible and user-friendly. This flexibility is crucial in regions with intermittent or unreliable internet access and also enhances the user experience by providing convenience and reducing dependency on network availability.

## Claims

1. A system for processing the signing of a blockchain transaction, the system comprising:
a) a digital storage medium configured to store a portion of an access-key for signing, in particular blockchain, transactions; and
b) a signature terminal comprising an input means configured to receive an input representative for the remaining not-stored part of the access-key to complete the signature, wherein
a transaction to be signed on a blockchain is signed by a signing module based on a combination of the stored part of the access key on the digital storage medium and the input by the input means of the signature terminal.

2. A system according to claim 1, wherein
the digital storage medium is provided in form of or in combination with a RFID-Tag, NFC-Tag or UHF-Tag, each tag capable of storing a portion of said access key and transmitting said portion to a tag-reader, wherein said tags include passive, semi-passive, and semi-active tags.

3. A system according to any of the preceding claims, wherein
said input means selected from the group consisting of:
A physical keypad, a virtual keyboard displayed on a touchscreen interface, a voice recognition module, a biometric scanner; an RFID or NFC reader, a smart card reader, a secure point-to-point connection module, a rotary dial, or a light pen.

4. A system according to any of the preceding claims, wherein
each tag further capable of receiving and executing kill codes, wherein a kill code according to the present invention may either be sent by the signing module or the signature terminal, wherein prefereably the storage device itself has a protection circuit or software solution implemented that recognized attacks for unallowed access to the stored access-keys.

5. A system according to claim 3 or 4, wherein
the biometric scanner is selected from the group consisting of: a fingerprint scanner, an iris scanner, a facial recognition scanner, wherein the non-stored part of the access key is calculated based on this information by the signature terminal.

6. A system according to any of the claims 3 to 5, wherein
the secure point-to-point connection module is configured to receive PIN codes via a connection selected from the group consisting of Bluetooth or infrared.

7. A system according to any of the preceding claims, wherein
the access key is stored by a user partly with the help of input means on the storage medium or a new access key is generated by the system and partly displayed to the user and partly stored on the storage medium, wherein in particular the access-key is mapped to another logic of figures, symbols or word, preferably converted into figures according to the decimal system.

8. A system according to any of the preceding claims, wherein
the access key is a seed phrase or master seed phrase, which is in particular encrypted via SHA-256 or another cryptographic algorithm.

9. A system according to any of the preceding claims, wherein
a multiple a signing modules in connection with one or more signature terminals each forming a network, wherein within the network the status of each module and terminal, in particular hardware and/or software, is synchronized with the further modules and terminals.

10. A system according to claim 9, wherein
within the network, a consensus algorithm is established to decide if a devices is working correct, improbably or malicious.

11. A system according to any of the preceding claims, wherein
for processing a transaction, the signing module is connected to the internet or in active connection with a computer network running a blockchain while the user may be offline.

12. A system according to any of the claims 1 to 10, wherein
the signing module is offline and only connects to the internet or to an computer network running a blockchain at a later point in time.

13. A system according to claim 12, wherein
the blockchain, whose transaction is to be signed, allow vertical or horizontal scaling as well as temporal delegations, in particular utilizing proof-of-work algorithm that also uses zk-proofs, a proof-of-work algorithm with a delegated-proof-of-stake algorithm, and/or a combination of Plasma algorithms, proof-of-history algorithm, and proof-of-replication/delegated-proof-of-replication algorithms.

14. A system according to any of the preceding claims, wherein
the transactions processed are payment transactions, internal transactions, accounting transactions, identity verification processes or transactions related with the same.

15. A method for processing a transaction, in particular a payment, wherein the user is connecting the digital storage medium to a signature terminal, the part of the access key stored on the storage medium is transferred for signing, and in the next step the user completes the access key with the help of the input means and confirms the transaction on the blockchain, and wherein in particular the transaction can be process while the storage medium, the signature terminal and/or the input means are offline
